# EUROPEAN PATENT SPECIFICATION

(11) **EP 1 700 209 B1**
(45) Date of publication and mention of the grant of the patent: **07.01.2009**
(21) Application number: 04815332.4
(22) Date of filing: 21.12.2004
(51) Int. Cl.: G06F 9/45

(54) **DATA LAYOUT MECHANISM TO REDUCE HARDWARE RESOURCE CONFLICTS**
DATENLAYOUT-MECHANISMUS ZUR VERRINGERUNG VON HARDWARE-BETRIEBSMITTELKONFLIKTEN
MECANISME DE DISPOSITION DES DONNEES DESTINE A REDUIRE LES CONFLITS DE RESSOURCES MATERIELLES

(30) Priority: 29.12.2003 US 748384
(43) Date of publication of application: 13.09.2006
(73) Proprietor: Intel Corporation, Santa Clara, CA 95052 (US)
(72) Inventor: SHPEISMAN, Tatiana, Menlo Park, CA 94025 (US); ADL-TABATABAI, Ali-Reza, Santa Clara, CA 95051 (US)
(74) Representative: Beresford, Keith Denis Lewis
(86) International application number: PCT/US2004/043238
(87) International publication number: WO 2005/066764

(56) References cited:
- US-A1- 2001 052 106
- KO M-Y, BHATTACHARYYA S S: "Partitioning for DSP Software Synthesis" SOFTWARE AND COMPILERS FOR EMBEDDED SYSTEMS: 7TH INTERNATIONAL WORKSHOP, SCOPES 2003, VIENNA, SEPTEMBER 24-26, 2003, PROCEEDINGS (SPRINGER LNCS 2826), 26 September 2003 (2003-09-26), pages 344-358, XP002349106 ISBN: 3-540-20145-9
- YU HEN HU (EDITOR): "Programmable Digital Signal Processors" 2001, MARCEL DEKKER , XP002352402 ISBN: 0-8247-0647-1 Chapter 8 - S S Bhattacharyya: Hardware/Software Cosynthesis of DSP Systems (pages 333-378) page 337, lines 3-8
- BHATTACHARYYA S S ET AL: "Software Synthesis and Code Generation for Signal Processing Systems" IEEE TRANSACTIONS ON CIRCUITS AND SYSTEMS-II: ANALOG AND DIGITAL SIGNAL PROCESSING, vol. 47, no. 9, September 2000 (2000-09), pages 849-875, XP002352333 ISSN: 1057-7130
- SAFARI S ET AL: "Testability improvement during high-level synthesis" 12TH ASIAN TEST SYMPOSIUM, 2003. ATS 2003. 16-19 NOV. 2003, PISCATAWAY, NJ, USA,IEEE, 19 November 2003 (2003-11-19), page 505, XP010672538 ISBN: 0-7695-1951-2

## Description

### FIELD

Embodiments of this invention relate to a data layout mechanism to reduce hardware resource conflicts.

### BACKGROUND

In computer systems, processors that access certain combinations of memory locations close in time, in the same execution cycle, or within several, execution cycles of each other, for example, may result in performance penalties. Performance penalties refer to consequences, typically disadvantageous, that may result from the operation of a computer system under a certain set of conditions. Performance penalties may comprise, for example, memory access delays. Memory access delays may occur, for example, because of a hardware resource conflict, such as when memory locations require the same hardware resource, such as a data bank in a cache memory, that can process only one data request at a time.

In the Intel® Itaniura® 2 processor, for example, which is commercially available from the Assignee of the subject application, the Level 2 cache data array may comprise 16 banks, where each bank may hold 16 bytes of data. Furthermore, there may be a block-circular mapping from memory locations to data banks. Since a memory subsystem, for example, in the Intel® Itanium® 2 processor may only be able to process one request to a data bank during an execution cycle, two loads or two stores issued in the same execution cycle, for example, which reference memory locations that map to the same data bank, may result in a hardware resource conflict, and may cause memory access delays.

An existing mechanism to reduce or eliminate hardware resource conflicts, such as cache data bank conflicts, uses information about data layout to determine the data that map or are likely to map to the same hardware resource, and schedules the instructions that access such data in non-conflicting cycles. A data layout mechanism is a method of mapping data accessed by program instructions to memory locations. Data layout may occur statically, where data is mapped to memory locations during compile or link time, or dynamically, where data is mapped to memory locations during program execution. The existing mechanism limits the compiler ability to schedule the memory access instructions as early as allowed by program properties. Furthermore, it does not eliminate hardware resource conflicts mat may result from accessing data that are allocated after instruction scheduling, such as data that is allocated during link time.
KO M-Y, BHATTACHARYYA S S: "partitioning for DSP Software Synthesis" SOFTWARE AND COMPILERS FOR EMBEDDED SYSTEMS: 7TH INTERNATIONAL WORKSHOP, SCOPES 2003, VIENNA, SEPTEMBER 24-26 PROCEEDINGS (SPRINTER LNCS 2826), 26 September 2003(2003-09-26), pages 344-358, XP002349106 ISBN: 3-540-20145-9 describes conflict graphs in which conflict edges connect nodes and a colouring method in which colour represent banks
Aspects of the present invention are set out in the appended independent claims.

### BRIEF DESCRRIPTION OF THE DRAWINGS

Embodiments of the present invention are illustrated by way of example, and not by way of limitation, in the figures of the accompanying drawings and in which like reference numerals refer to similar elements and in which:

FIG. 1 illustrates a system.

FIG. 2 illustrates a system embodiment according to on embodiment.

FIGS. 3-9 illustrate an example in an exemplary embodiment.

FIG. 10 illustrates block-circular mapping.

FIG. 11 is a flowchart illustrating a method according to a first embodiment.

FIG. 12 is a flowchart illustrating another method according to the first embodiment.

### DETAILED DESCRIPTION

Embodiments of the present invention include various operations, which will be described below. The operations associated with embodiments of the present invention may be performed by hardware components or may be embodied in machine-executable instructions, which when executed may result in a general-purpose or special-purpose processor or circuitry programmed with the machine-executable instructions performing the operations. Alternatively, and/or additionally, some or all of the operations may be performed by a combination of hardware and software.

Embodiments of the present invention may be provided, for example, as a computer program product which may include one or more machine-readable media having stored thereon machine-executable instructions that, when executed by one or more machines such as a computer, network of computers, or other electronic devices; may result in the one or more machines carrying out operations in accordance with embodiments of the present invention. A machine-readable medium may include, but is not limited to, floppy diskettes, optical disks, CD-ROMs (Compact Disc-Read Only Memories), and magnetooptical disks, ROMs (Read Only Memories), RAMs (Random Access Memories), EPROMs (Erasable Programmable Read Only Memories), EEPROMs (Electrically Erasable Programmable Read Only Memories), magnetic or optical cards, flash memory, or other type of media / machine-readable medium suitable for storing machine-executable instructions.

Moreover, embodiments of the present invention may also be downloaded as a computer program product, wherein the program may be transferred from a remote computer (e.g., a server) to a requesting computer (e.g., a client) by way of one or more data signals embodied in and/or modulated by a carrier wave or other propagation medium via a communication link (e.g., a modem and/or network connection). Accordingly, as used herein, a machine-readable medium may, but is not required to, comprise such a carrier wave.

Examples described below are for illustrative purposes only, and are in no way intended to limit embodiments of the invention. Thus, where examples may be described in detail, or where a list of examples may be provided, it should be understood that the examples are not to be construed as exhaustive, and do not limit embodiments of the invention to the examples described and/or illustrated.

### Introduction

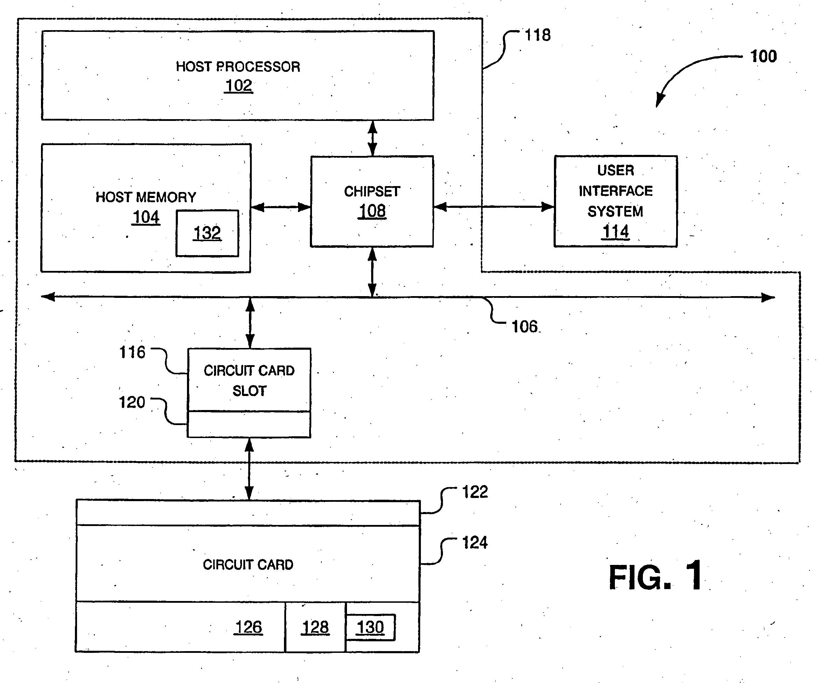

FIG. 1 illustrates system. System 100 may comprise host processor 102, host memory 104, bus 106, and chipset 108. Host processor 102 may comprise, for example, an Intel® Itanium® 2 processor. Of course, alternatively, host processor 102 may comprise another type of microprocessor, such as, for example, a microprocessor that is manufactured and/or commercially available from a source other than the Assignee of the subject application, without departing from this embodiment.

Host processor 102 may be communicatively coupled to chipset 108. As used herein, a first component that is "communicatively coupled" to a second component shall mean that the first component may communicate with the second component via wirelined (e.g., copper wires), or wireless (e.g., radio frequency) means. Chipset 108 may comprise a host bridge/hub system that may couple host processor 102, host memory 104, and a user interface system 114 to each other and to bus 106. Chipset 108 may also include an I/O bridge/hub system (not shown) that may couple the host bridge/bus system 108 to bus 106. Chipset 108 may comprise integrated circuit chips, such as those selected from integrated circuit chipsets commercially available from the Assignee of the subject application (e.g., graphics memory and I/O controller hub chipset), although other integrated circuit chips may also, or alternatively, be used. User interface system 114 may comprise, e.g., a keyboard, pointing device, and display system that may permit a human user to input commands to, and monitor the operation of, system 100.

Bus 106 may comprise a bus that complies with the Peripheral Component Interconnect (PCI) Local Bus Specification, Revision 2.2, December 18, 1998 available from the PCI Special Interest Group, Portland, Oregon, U.S.A. (hereinafter referred to as a "PCI bus"). Alternatively, bus 106 instead may comprise a bus that complies with the PCI-X Specification Rev. 1.0a, July 24, 2000, available from the aforesaid PCI Special Interest Group, Portland, Oregon, U.S.A. (hereinafter referred to as a "PCI-X bus"). Also, alternatively, bus 106 may comprise other types and configurations of bus systems.

System 100 may comprise one or more memories to store the machine-executable instructions 130, 132 capable of being executed, and/or data capable of being accessed, operated upon, and/or manipulated by processor, such as host processor 102, and/or circuitry, such as circuitry 126. Memory may include host memory 104, and memory 128 in circuitry 126, for example. Memories 104, 128 may comprise read only, mass storage, and/or random access computer-readable memory. The execution of program instructions 130, 132 and/or the accessing, operation upon, and/or manipulation of this data by the processor 102 and/or circuitry 126 may result in, for example, processor 102 and/or circuitry 126 carrying out some or all of the operations described herein.

Host processor 102, host memory 104, bus 106, chipset 108, and circuit card slot 116 may be comprised in a single circuit board, such as, for example, a system motherboard 118. Circuit card slot 116 may comprise a PCI expansion slot that comprises a PCI bus connector 120. PCI bus connector 120 may be electrically and mechanically mated with a PCI bus connector 122 that is comprised in circuit card 124. Circuit card slot 116 and circuit card 124 may be constructed to permit circuit card 124 to be inserted into circuit card slot 116. When circuit card 124 is inserted into circuit card slot 116, PCI bus connectors 120, 122 may become electrically and mechanically coupled to each other. When PCI bus connectors 120, 122 are so coupled to each other, circuitry 126 in circuit card 124 may become electrically coupled to bus 106.

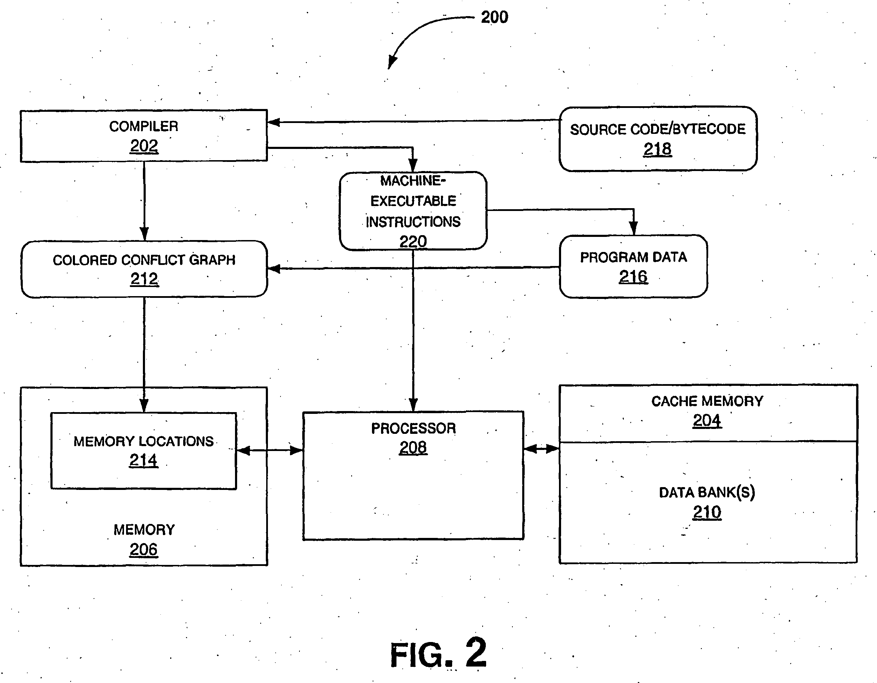

FIG. 2 illustrates a system embodiment 200 according to one embodiment of the invention that may be implemented in one or more components of system 100. System 200 may include compiler cache memory 204, memory 206, and processor 208.

Compiler 202 refers to functionality that may convert source code or byte code 218 to machine-executable instructions 220 that may be executed by processor 208, such as host processor 102. Machine-executable instructions 220 may reside in a memory, such as memory 104, and may be machine-executable instructions 132, for example. In one embodiment, compiler 202 may comprise a machine-executable program that may be embodied in machine-executable instructions, such as machine-executable instructions 132 on host memory 104. In embodiments of the invention, compiler 202 may also generate a colored conflict graph 212. Compiler 202 may layout data by mapping program data 216, which are accessed by machine-executable instructions 220, to a plurality of memory locations 214 in memory 206, in accordance with colored conflict graph 212. At program execution time, processor 208 may assign memory locations 214 in memory 206 to data banks 210 in cache memory 204 in accordance with a memory locations-data bank mapping.

Compiler 202 may be a just-in-time compiler (hereinafter "JIT compiler"). A JIT compiler refers to a machine-executable program that may dynamically convert bytecode into object code, where the source code may first be converted into the bytecode. A JIT compiler may enable computer platform differences, such as instruction lengths, to be recognized and accommodated as the machine-executable program is being executed (i.e., dynamically, as opposed to statically), because the bytecode may be a platform-independent code that can be sent directly to any platform and run on that platform.

In the Java^{™} programming language and environment for example, which is described in "The Java Language Specification" by James Gosling, Bill Joy, and Guy Steele, Addison-Wesley, 1991, and is commercially available from Sun Microsystems, Inc., a source code program may be written in the Java^{™} programming language (hereinafter "Java^{™} program"). The Java^{™} program may be executed on a machine having a Java^{™} virtual machine. A compiler, such as a Java^{™} compiler, may translate the Java^{™} program into bytecode, and a Java^{™} virtual machine may employ a JIT compiler to convert byte code into machine executable instructions. Alternatively, compiler 202 may be a static compiler. A static compiler refers to a machine-executable program that may convert source code into object code that may be understood by a particular platform.

Cache memory 204 refers to a high speed memory that may comprise, for example, a high speed RAM (random access memory). Cache memory 204 may be used to store information, such as program data 216, or programming instructions (e.g., machine-executable instructions 220), that may be accessed often. For example, a cache memory 204 may be used to store programming instructions that are accessed 90% of the time during the execution of the program, or program data 216 that may be accessed repeatedly by a machine-executable program.

Cache memory 204 may be a level 1 (hereinafter "L1") cache. An L1 cache may be a memory that is located directly on the host processor 102 (memory on host processor 102 not shown). Alternatively, cache memory 204 may be a level 2 (hereinafter "L2") cache. An L2 cache may be a memory that resides outside of the host processor 102, such as memory 104, or memory 128. Cache memory 204 may comprise one or more data banks 210. A "data bank" is a hardware resource that may be used to access data in a cache memory. A data bank may have one or more processing constraints. For example, data bank 210 might be able to handle just one data request during an execution cycle. Consequently, accessing program data 216 in memory locations 214, during execution time, that map to the same data bank 210 by machine-executable instructions during the same execution cycle may result in a hardware resource conflict.

Memory 206 may comprise a memory such as host memory 104, or memory 128, for example. In the example illustrated in FIG. 2, memory 206 may store program data 216 that may be copied into one or more data banks 210 of cache memory 204 for high speed, faster access by processor 208.

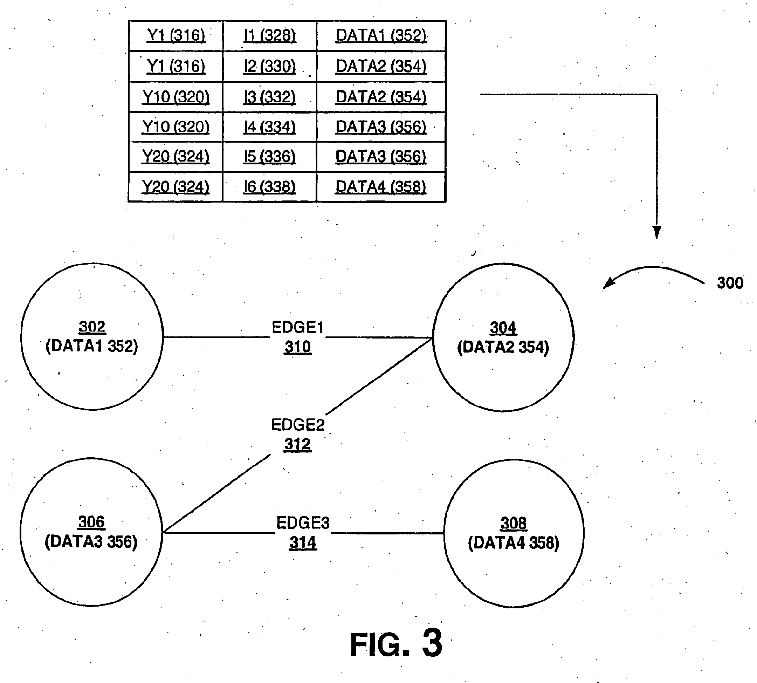

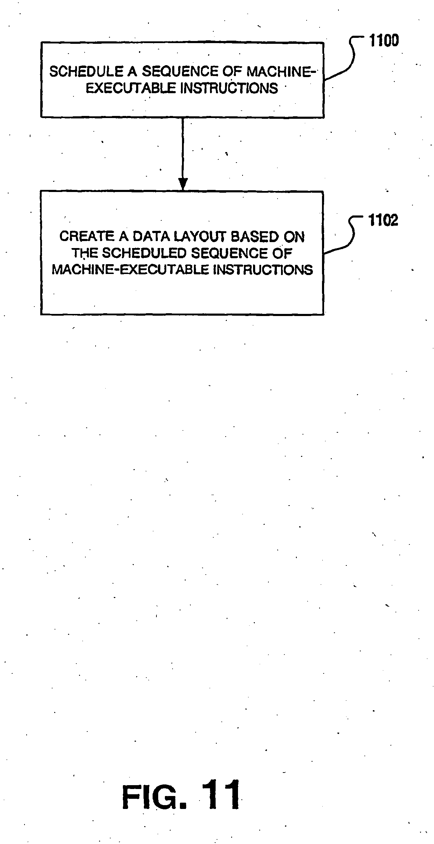

FIG. 11 illustrates a method according to a first embodiment. With additional reference to FIGS. 2-8, compiler 202 (FIG. 2) may schedule for execution by processor 208, a sequence of machine-executable instructions 328, 330, 332, 334, 336, 338 (FIG. 3, and 220 in FIG. 2) read from a memory, such as memory 206 (FIG. 2), at block 1100. Scheduling machine-executable instructions 220 may determine the order in which the machine-executable instructions 220 will be sent to processor 208 during program execution. In embodiments of the invention, scheduled machine-executable instructions 220 may be sent to processing circuitry 212 in the order in which the machine-executable instructions 220 are stored in main memory 206.

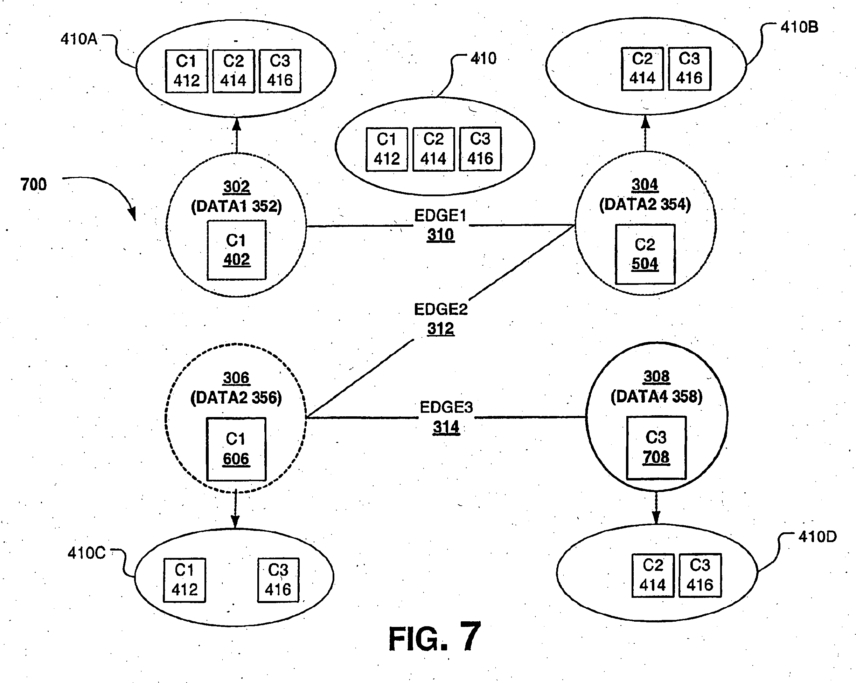

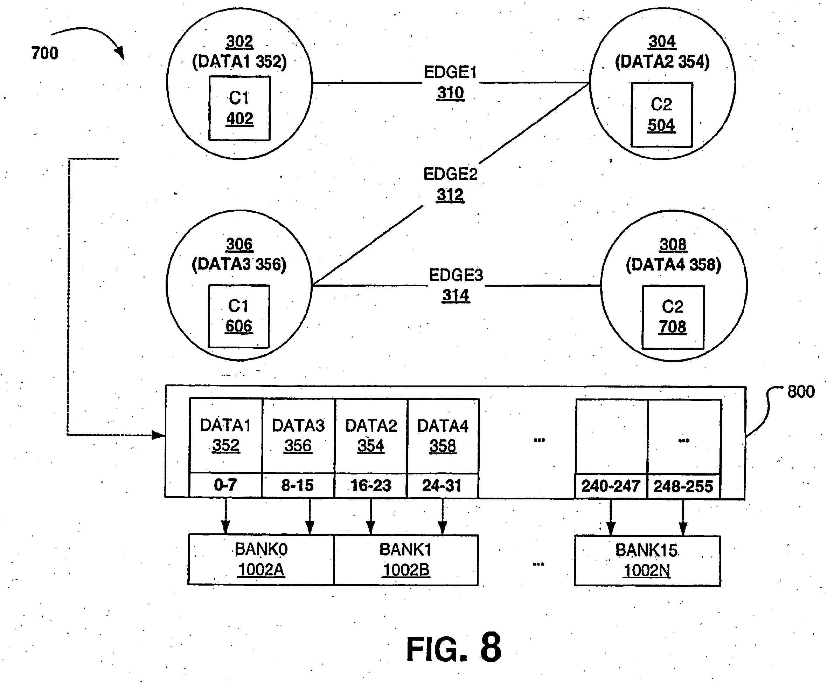

During a data layout phase at block 1102, compiler 202 may create a data layout 800 (FIG. 8) based on the scheduled sequence of machine-executable instructions 328, 330, 332, 334, 336, 338 (FIG. 3). In one embodiment, data layout 800 may comprise a layout of data elements 352, 354, 356, 358 (FIG. 3), where data elements 352, 354, 356, 358 may be data in program data 216 (FIG. 2). Data layout 800 may be created in accordance with a colored conflict graph 700 (FIG. 7), the colored conflict graph 700 being based on the scheduled sequence of machine-executable instructions 328, 330, 332, 334, 336, 338. Data layout 800 may correspond to a mapping of data elements 352,354,356, 358 to memory locations 214 so as to eliminate or reduce, hardware resource conflicts during program execution.

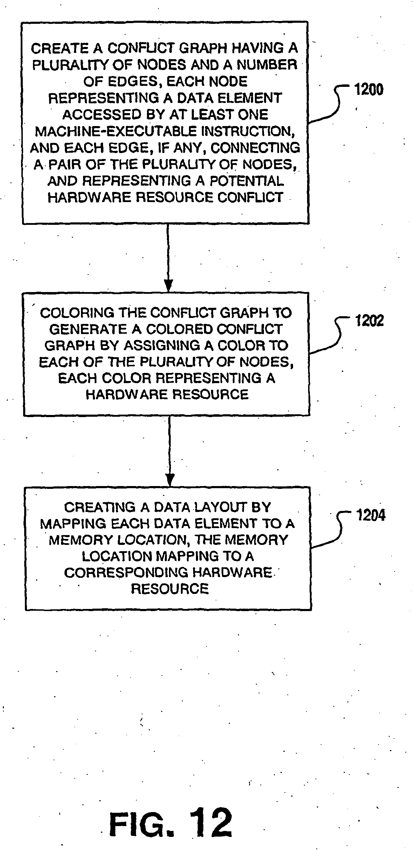

FIG. 12 illustrates another method according to the first embodiment. Again with additional reference to FIGS. 2-8, at block 1200, compiler 202 (FIG. 2)may create a conflict graph 300 (FIG. 3) having a plurality of nodes 302, 304, 306, 308 and a number of edges 310, 312, 314, where the number of edges may be greater than or equal to 0. Each node 302, 304, 306, 308 may represent a data element 352, 354, 356, 358 that may be accessed by at least one machine-executable instruction, and each edge 310, 312, 314, if any, may connect a pair of the plurality of nodes 302, 304, 306, 308, and may represent a potential hardware resource conflict. At block 1202, compiler 202 (FIG. 2) may color the conflict graph to generate a colored conflict graph 700 (FIG. 7) by assigning a color C1 (412), C2 (414), C3 (416) to each of the plurality of nodes 302, 304, 306, 308, where each color may represent a hardware resource. At block 1204, compiler may create a data layout 800 (FIG. 8) by mapping each data element to a memory location 214, where each memory location 214 may map to a corresponding hardware resource.

In embodiments of the invention, potential hardware resource conflicts, which may be represented by edges 310, 312, 314 (FIG. 3) in a conflict graph 300, may result in hardware resource conflicts if a pair of nodes connected by an edge are assigned the same color. In this manner, colored conflict graph 700 (FIG. 7) may be used to assign hardware resources to data elements 352, 354, 356, 358 (FIG. 3) to subsequently avoid hardware resource conflicts. In one embodiment, hardware resources may be assigned to data elements 352, 354, 356, 358 by assigning data elements DATA1 (352), DATA2 (354), DATA3 (356), DATA4 (358) corresponding to nodes 302, 304, 306, 308 to memory locations 214 that map to data banks 210.

A "hardware resource conflict" means a conflict that may result from accessing a hardware resource, such as a data bank 210, due to constraints on the hardware resource. A "conflict graph" is a depiction of potential conflicts between data elements, such as data elements 352, 354, 356, 358. In one embodiment, each data element 352, 354, 356, 358 may be represented by a corresponding node 302, 304, 306, 308, and a potential conflict between a pair of nodes of the plurality of nodes 302, 304, 306, 308 may be represented by an edge 310, 312, 314. The plurality of nodes 302, 304, 306, 308 in colored conflict graph 800 may be further assigned a color to produce a colored conflict graph 700 (FIG. 7). A "colored conflict graph" is a conflict graph that may depict conflicts, if any, that may be represented by the assignment of the same color to any pair of nodes connected by an edge. Each color may correspond to a unique hardware resource such that assigning the same color to a pair of nodes of the plurality of nodes 302, 304, 306, 308 (FIG. 3) connected by an edge 310, 312, 314 may result in a conflict during program execution. By carefully assigning a color to each node of the plurality of nodes 302, 304, 306, 308, hardware resource conflicts may be reduced, or eliminated in some cases.

In reference to FIG. 3, compiler 202 may create a data layout 800 (FIG. 8) by mapping data elements 352, 354, 356, 358 referenced by the machine-executable instructions 328, 330, 332, 334, 336, 338 to memory locations 214 (where each memory location 214 may map to a hardware resource, such as data banks 210) in accordance with a colored conflict graph 700 (FIG. 7). Data layout 800 that may be created in accordance with colored conflict graph 700 may enable data elements 352, 354, 356, 358 to be assigned to hardware resources such that hardware resource conflicts may be reduced or eliminated. Compiler 202 may create data layout 800 in a data layout phase.

### Conflict Graph

In embodiments of the invention, compiler 202 may use memory location-data bank mapping information to infer what data bank 210 will be used for which memory locations 214 to reduce or eliminate data bank conflicts that may occur during program execution. In one embodiments, compiler 202 may generate a conflict graph 300 that may indicate potential data bank conflicts. The data bank conflicts may be the result of accessing data elements 352, 354, 356, 358 (located in memory locations 214 that map to the same data bank 210) by instructions 328, 330, 332, 334, 336, 338 in the same execution cycle. In this embodiment, a node may represent a data element 352, 354, 356, 358, and an edge between a pair of nodes may represent a data bank conflict if data elements 332, 354, 356, 358 corresponding to the pair of nodes are located in memory locations 214 that map to the same bank 210, and are accessed by instructions 328, 330, 332, 334, 336, 338 in the same execution cycle 316, 320, 324. A node that may represent data element 352, 354, 356, 358 may be a node that corresponds to data element 352, 354, 356, 358.

As illustrated in FIG. 3, a conflict graph 300 may comprise a plurality of nodes 302, 304, 306, 308, and a number of edges 310, 312, 314, where the number of edges may be greater than or equal to 0. Each edge 310, 312, 314, if any, may connect a pair of nodes of the plurality of nodes 302, 304, 306, 308. As illustrated in FIG. 3, for example, EDGE1 (310) connects node 302 to node 304; EDGE2 (312) connects node 304 to node 306; and EDGE3 (314) connects node 306 to node 308.

In FIG. 3, instruction I1 (328) may access data element DATA1 (352) in execution cycle Y1 (316); instruction 12 (330) may access data element DATA2 (354) in execution cycle Y1 (316); instruction I3 (332) may access data element DATA2 (354) in execution cycle Y10 (320); instruction I4 (334) may access data element DATA3 (356) in execution cycle Y10 (320); instruction 15 (336) may access data element DATA3 (356) in execution cycle Y20 (324), and instruction 16 (338) may access data element DATA4 (358) in execution cycle Y20 (324).

In embodiments of the invention, a node 302, 304, 306, 308 may be created for each data element 352, 354, 356, 358 that may be accessed by one or more machine-executable instructions I1 (328), I2 (330), I3 (332), I4 (334), I5 (336), I6 (338), such that each node 302, 304, 306, 308 corresponds to a unique data element 352, 354, 356, 358. In one embodiment of the invention, an edge 310, 312, 314 may connect a pair of nodes 302, 304, 306, 308 if data elements 352, 354, 356, 358 corresponding to the pair of nodes 302, 304, 306, 308 are accessed by instructions 328, 330, 332, 334, 336, 338 in the same execution cycle 316, 320, 324.

Compiler 202 may generate a conflict graph using an exemplary algorithm such as the following:

1. Create a node for each data element.

2. For each pair of nodes of the plurality of nodes, create an edge between the nodes if mapping data elements corresponding to the nodes to the same hardware resource may result in a conflict. This may be accomplished, for example, by:

• Determining a pair of conflicting instructions, where each instruction may access one or more data elements, and each data element may correspond to a node (created in item 1, above). "Conflicting instructions", as used herein, refers to instructions that are executed in the same cycle.

• Creating an edge between the nodes corresponding to the data elements, where each data element may be accessed by at least one of the instructions of the pair of conflicting instructions.

In one embodiment, for example, as illustrated in examples below, an edge may be created between a pair of the plurality of nodes 302, 304, 306, 308 if data elements 342, 344, 346, 348 corresponding to the pair of nodes are accessed by instructions 328, 330, 332, 334, 336, 338 in the same execution cycle 316,320,324.

In FIG. 3, conflict graph 300 may be created as follows:

1. Create a node for each data element.

Node 302 may be assigned to DATA1 (352).

Node 304 may be assigned to DATA2 (354);

Node 306 may be assigned to DATA3 (356);

Node 308 may be assigned to DATA4 (358).

2. For each pair of nodes of the plurality of nodes, an edge may be created between a pair of the plurality of nodes 302, 304, 306, 308 if data elements 342, 344, 346, 348 corresponding to the pair of nodes are accessed by instructions 328, 330, 332, 334, 336, 338 in the same execution cycle 316, 320, 324. For the following pairs of conflicting instructions, edges 310, 312, 314 may be created as follows:

I1 (328) and I2 (330) may both be executed in Y1 (316): these instructions access data elements DATA1 (352) and DATA2 (354), which correspond to node 302 and node 304. Thus, an edge EDGE1 (310) may be created between node 302 and node 304.

I3 (332) and I4 (334) may both be executed in Y10 (320): these instructions access data elements DATA2 (354) and DATA3 (356), which correspond to node 304 and node 306. Thus, an edge EDGE2 (312) may be created between node 304 and node 306.

I5 (336) and 16 (338) may both be executed in Y20 (324): these instructions access data elements DATA3 (356) and DATA4 (358), which correspond to node 306 and node 308. Thus, an edge EDGE3 (314) may be created between node 306 and node 308.

In summary, three (3) edges 310, 312, 314 may be created in conflict graph 300. EDGE1 (310) may connect node 302 and node 304 because data elements DATA1 (352) and DATA2 (354) corresponding to those nodes are accessed in the same execution cycle Y1 (316) by instructions I1 (328) and 12 (330). EDGE2 (312) connects node 304 and node 306 because data elements DATA2 (354) and DATA3 (356) corresponding to those nodes are accessed in the same execution cycle Y10 (320) by instructions 13 (332) and I4 (334). EDGE 314 connects node 306 and 308 because data elements DATA3 (356) and DATA4 (358) corresponding to those nodes are accessed in the same execution cycle Y20 (324) by instructions 15 (336) and I6 (338).

### Colored Conflict Graph

In embodiments of the invention, each color C1 (412), C2 (414), C3 (416) may correspond to a hardware resource, such as a data bank 210 in cache memory 204. Using data banks as an example, each node in conflict graph 300 may be colored by assigning the node a color. The assignment of a color to a node may represent the assignment of a hardware resource to the data represented by the node. An edge connecting two nodes may represent a potential hardware resource conflict that may result in performance penalties. Such potential hardware resource conflict represented by an edge may result in a hardware resource conflict in the event that the nodes connected by the edge are assigned the same color (that is, the same hardware resource). In embodiments of the invention, attempts are made to color adjacent nodes different colors to avoid these performance penalties. As used herein, "adjacent nodes" are nodes connected by some edge such as edge EDGE1 (310), EDGE2 (312), EDGE3 (314). A "colored node" is a node that has been assigned a color, and an uncolored node" is a node that has not been assigned a color.

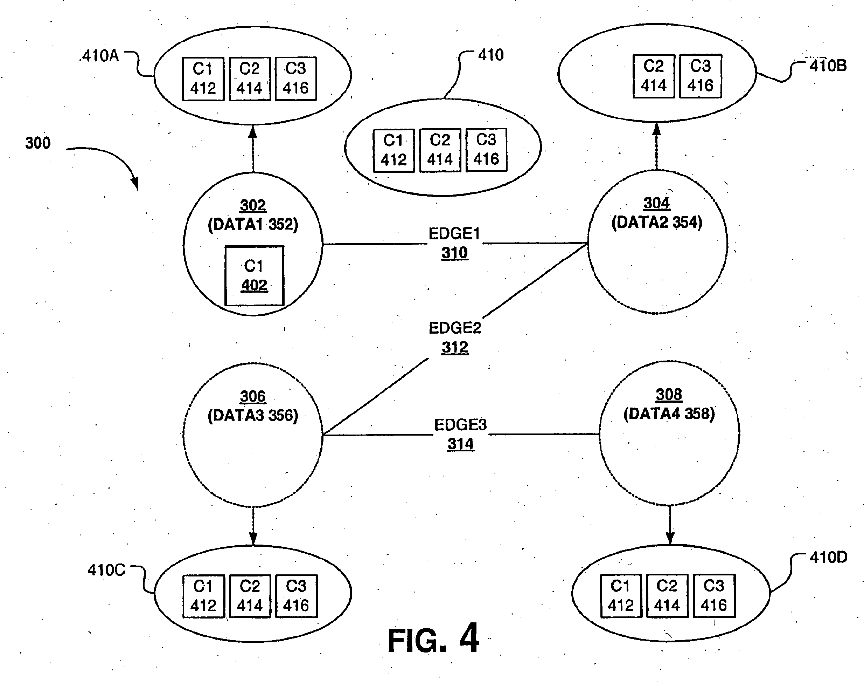

For each node in a conflict graph compiler 202 may create and maintain a color set, such as color set 410A, 410B; 410C, 410D (FIG. 4, where each color set is hereinafter referred to as "corresponding color set") and/or community color set 410. Each corresponding color set 410A, 410B, 410C, 410D may initially comprise colors from community color set 410, where community color set 410 may comprise a plurality of colors C1 (412), C2 (414), C3 (416). As illustrated in FIG. 4, compiler 202 may assign a color to a current node from a corresponding color set 410A, 410B, 410C, 410D, or from community color set 410. As nodes are colored, colors may be removed from corresponding color sets 410A, 410B, 410C, 410D such that corresponding color sets 410A, 410B, 410C, 410D may comprise anywhere from none of colors C1 (412), C2 (414), C3 (416) in community color set 410, to all of colors C1 (412), C2 (414), C3 (416) in community color set 410, and such that corresponding color set 410A, 410B, 410C, 410D may represent a set of colors that have not been assigned to the nodes adjacent to the current node. Consequently, if a current node has a corresponding color set 410A, 410B, 410C, 410D that is not empty, then a current node will not end up with the same color as an adjacent node.

In the illustrated embodiment, each node may be associated with a corresponding color set 410A, 410B, 410C, 410D. Nodes 302, 304, 306, 308 may each be assigned a color C1 (412), C2 (414), C3 (416) from a corresponding color set 410A, 410B, 410C, 410D, respectively, or from community color set 410. Compiler 202 may designate one of plurality of nodes 302, 304, 306, 308 as a current node to which it will assign a color C1 (412), C2 (414), C3 (416) from a corresponding color set 410A, 410B, 410C, 410D, or from community color set 410. Compiler 202 may select a first color from corresponding color set 410A, 410B, 410C, 410D, or from community color set 410, and assign it to the current node. In one embodiment, compiler 202 may select a color C1 (412), C2 (414), C3 (416) from a corresponding color set 410A, 410B, 410C, 410D if the corresponding color set 410A, 410B, 410C, 410D is not empty. If the corresponding color set 410A, 410B, 410C, 410D is empty, then compiler 202 may select a color from community color set 410.

A corresponding color set 410A, 410B, 410C, 410D may be determined as each node 302, 304, 306, 308 is processed such that, for example, compiler may initialize each corresponding color set 410A, 410B, 410C, 410D to comprise all colors C1 (412), C2 (414), C3 (416) from community color set 410, and may remove from corresponding color sets 410A, 410B, 410C, 410D of all nodes adjacent to the current node the color C1 (412), C2 (414), C3 (416) assigned to the current node, during the processing of the current node. Alternatively, compiler 202 may determine a corresponding color set 410A, 410B, 410C, 410D for each node during processing of that node, for example, by first initializing the corresponding color set 410A, 410B, 410C, 410D for the current node to comprise all colors C1 (412), C2 (414), C3 (416) from community color set 410, and removing the colors C1 (412), C2 (414), C3 (416) assigned to the nodes adjacent to the current node from the corresponding color set 410A, 410B, 410C, 410D of the current node. In this method, it may not be necessary to maintain a color set for each node - a single color set may be maintained, and recomputed for each current node. Both methods are acceptable, and do not depart from embodiments of the invention.

### Selecting a Color From a Color Set

In embodiments of the invention, if a corresponding color set 410A, 410B, 410C, 410D is not empty, then a color may be selected from the corresponding color set 410A, 410B, 410C, 410D arbitrarily, or such that the color minimizes memory usage. In embodiments of the invention, a color minimizes memory usage if the color corresponds to a data size that does not result in an integer when divided by a block size. A "block size" as used herein, means the size of a contiguous block of memory that maps to the same hardware resource, such as a data bank. Also as used herein, a color that "corresponds" to a data size means that the color may be assigned to one or more data elements having a total data size equal to the data size. As an example, if each data element is 8 bytes, then each time a node 302, 304, 306, 308 corresponding to a data element 352, 354, 356, 358 is assigned a color, the color's corresponding data size may be incremented by 8 bytes. If the data size corresponding to a color results in an integer when divided by the block size, then assigning the color to another data element would result in starting a new block of memory. To minimize memory usage, therefore, colors are assigned such that a data element may be placed in a block that already has one or more data elements, thereby minimizing the usage of memory locations in memory. Selecting a color corresponding to a data size that does not result in an integer when divided by the block size may result in minimizing memory usage.

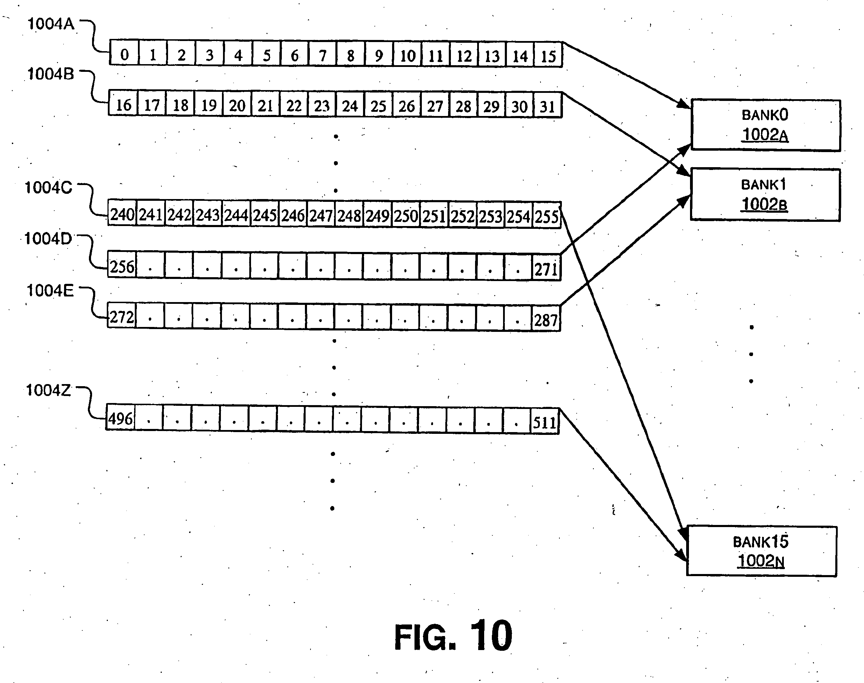

To illustrate this concept, attention may be directed to FIG. 10, which illustrates a block-circular mapping between memory locations 0-15, 16-311, ..., 240-255, 256-271, 272-287, ..., 496-511 and data banks 1002A, 1002B, ..., 1002N, such as in an Intel® Itanium® 2 processor. Memory locations 0-15, 16-31, ..., 240-255, 256-271, 272-287, ... , 496-511 may be memory locations 214 in memory 206, for example, and data banks 1002A, 1002B, ..., 1002N may be banks 210 in cache memory 204, for example.

In block-circular mapping, memory block 1004A, 1004B, ... 1004C, 1004D, 1004E, ... , 1004N comprising memory locations 0-15, 16-31, ..., 240-255, 256-271, 272-287, ..., 496-511, respectively, may each be mapped to a data bank 1002A, 1002B, ..., 1002N such that any data bank 1002A, 1002B, ..., 1002N may comprise data from one or more memory blocks 1004A; 1004B, ... 1004C, 1004D, 1004E, ..., 1004N. In the example illustrated in FIG. 10, data bank 1002A may hold data from memory block 1004A, 1004D, etc.; data bank 1002B may hold data from memory block 1004B, 1004E, etc.; and data bank 1002N may hold data from memory block 1004C, 1004Z, etc. (Memory locations beyond memory location 511, and memory blocks beyond memory block 1004Z may exist, but are not shown.)

Compiler may maintain a data size corresponding to each color C1 (412), C2 (414), C3 (416) in community color set 410. To determine a color for a current node that minimizes memory usage, compiler may analyze the data sizes of all colors C1 (412), C2 (414), C3 (416) that can be assigned to the current node. If any color C1 (412), C2 (414), C3 (416) corresponds to a data size that does not result in an integer when divided by the block size, then the color C1 (412), C2 (414), C3 (416) may be selected. If multiple colors C1 (412), C2 (414), C3 (416) correspond to a data size that does not result in an integer when divided by a block size, then any of these colors C1 (412), C2 (414), C3 (416) may be selected arbitrarily. If no color corresponds to a data size that does not result in an integer when divided by a block size then a color corresponding to the smallest data size may be selected.

### Determining a Least Weighed Conflict Color

If coloring adjacent nodes different colors is not possible (i.e., a corresponding color set 410A, 410B, 410C, 410D is empty), then in one embodiment, a color from community color set 410 may be arbitrarily selected. In another embodiment, a color from community color set 410 may be selected to minimize performance penalties associated with hardware resource conflicts. In one embodiment, potential data bank conflicts in conflict graph 300 may be depicted by edges EDGE1 (310), EDGE2 (312), EDGE3 (314), and the performance penalty of such potential data bank conflicts, if such conflicts result in actual conflicts, may be represented by a weight assigned to the edges EDGE1 (310), EDGE2 (312), EDGE3 (314). For example, a heavier weight may represent a conflict having a greater impact on performance. Put another way, determining a weight of an edge EDGE1 (310), EDGE2 (312), EDGE3 (314) may comprise determining a performance penalty associated with a hardware resource conflict represented by the edge EDGE1 (310), EDGE2 (312), EDGE3 (314). In one embodiment, an edge EDGE1 (310), EDGE2 (312), EDGE3 (314) may represent a memory access delay associated with accessing data in a data bank during the same execution cycle.

Using these assigned weights, compiler 202 may assign a color to the current node, the color being assigned to an adjacent node, such that the current node and the adjacent node are connected by an edge having a smallest weight among all the edges connecting the current node to its adjacent nodes, and thereby, representing the hardware resource conflict with the smallest impact on performance. If more than one edge has the smallest, weight, then in one embodiment, one of these edges may be selected arbitrarily. In another embodiment, one of the edges may be selected to minimize memory usage, as discussed above.

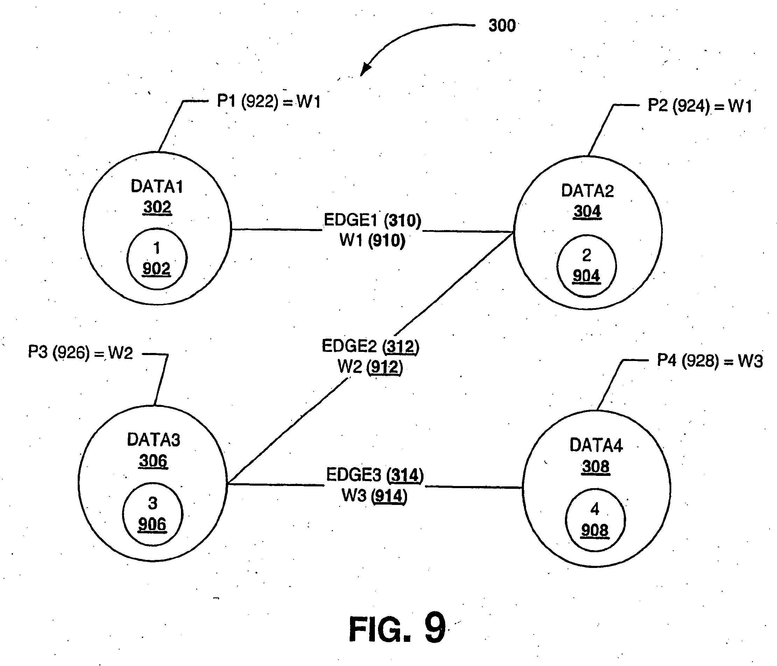

In one embodiment, for example, the performance penalty of an edge EDGE (310), EDGE2 (312), EDGE3 (314) may be computed as the stall execution cycles due to a hardware resource conflict, multiplied by the execution count of the conflicting instructions. In one example, with reference to FIG. 9, the community color set may comprise two colors C1 (412) and C2 (414), node 302 is assigned colored color C1 (412); node 306 is assigned color C2 (414), and node 304 is has not yet been assigned a color. In this example, it can be assumed that there are no available colors in corresponding color set 410B because both colors in the community color set have been assigned to the nodes adjacent to node 304. If a certain data bank conflict causes a 6-cycle delay, and instructions I1 and I2 that access data DATA1 (352) and DATA2 (354) corresponding to node 302 and node 304 connected by EDGE1 (310) are executed a total of 1000 times, then EDGE1 (310) may be assigned a performance penalty of 1000 X 6 =6000. The weight of EDGE1 (310) may be 6000. If EDGE2 (312) has a greater weight than EDGE1 (310), then the color C1 (412), C2 (414) that is assigned to node 304 may be the color C1 assigned to node 302 (C1 (412)) because node 302 is the node that is connected to node 304 by the edge, EDGE1 (310) having the least weight.

### Example

Initially, a corresponding color set 410A, 410B, 410C, 410D may be created for each node 302, 304, 306, 308, respectively. Each corresponding color set 410A; 410B, 410C, 410D may initially contain all colors from community color set 410. In one embodiment, a colored conflict graph may be created using the following exemplary algorithm:

1. If there is at least one uncolored node in the plurality of nodes 302, 304, 306, 308, select one as a current node. Selection of a node may be arbitrary, or may be dependent upon priorities assigned to nodes 302, 304, 306, 308, discussed below. For illustrative purposes, nodes 302, 304, 306, 308 may be colored in the following order: node 302, node 304, node 306, and node 308.

2. Assign the current node a color from a corresponding color set if it is not empty. Otherwise, assign the current node a color that is a least weighted conflict color.

Compiler may arbitrarily assign a color from color set. Alternatively, compiler 202 may assign a color from color set that minimizes memory usage. For purposes of illustration, it may be assumed that the data size of a data element is 8 bytes, and that a block size is 16 bytes.

3. For each node uncolored and adjacent to the current node, remove the color assigned to the current node from a color set corresponding to the adjacent node.

With reference to FIGS. 4-7, nodes 302, 304, 306, 308 may be colored as follows:

As illustrated in FIG. 4, node 302 may be colored as follows:

1. Since there is at least one uncolored node, compiler 202 may designate node 302 as the current node, which may be associated with color set 410A having colors C1 (412), C2 (414), C3 (416).

2. Compiler 202 may arbitrarily assign color C1 (412) to node 302. Alternatively, compiler 202 may assign a color from color set 410A that minimizes memory usage. Since all colors C1 (412), C2 (414), C3 (416) correspond to a data size of 0 (since no color has been assigned to a data element), the data size of all colors result in an integer when divided by the block size. Since colors in color set 410A correspond to the same data size, any of the colors may be selected to minimize memory usage. Node 302 has assigned color 402.

3. Since node 304 is uncolored and adjacent to node 302, because node 304 is connected to node 302 by EDGE1 (310), color C1 (412) may be removed from color set corresponding to node 304, color set 410B. Color set 410B may then comprise colors C2 (414) and C3 (416).

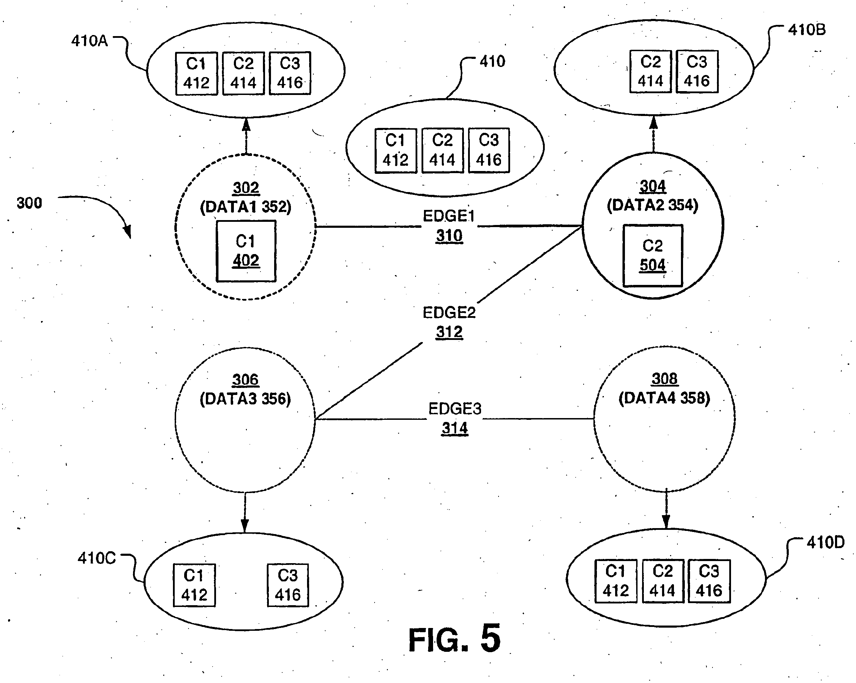

As illustrated in FIG. 5, node 304 may be colored as follows:

1. Since there is at least one uncolored node, compiler 202 may designate node 304 as the current node, which may be associated with color set 410B having colors C2 (414), C3 (416).

2. Compiler 202 may arbitrarily assign color C2 (414) to node 304. Alternatively, compiler 202 may assign a color from color set 410B that minimizes memory usage. Since colors C2 (414), C3 (416) correspond to a data size of 0 (since neither color has not been assigned to a data element), the data size of both colors result in an integer when divided by the block size. Since colors in color set 410B correspond to the same data size, either color may be selected to minimize memory usage. Node 304 has assigned color 504.

3. Since node 306 is uncolored and adjacent to node 304, because node 306 is connected to node 304 by EDGE2 (312), color C2 (414) may be removed from color set corresponding to node 306, color set 410C. Color set 410C may then comprise colors C1 (412) and C3 (416).

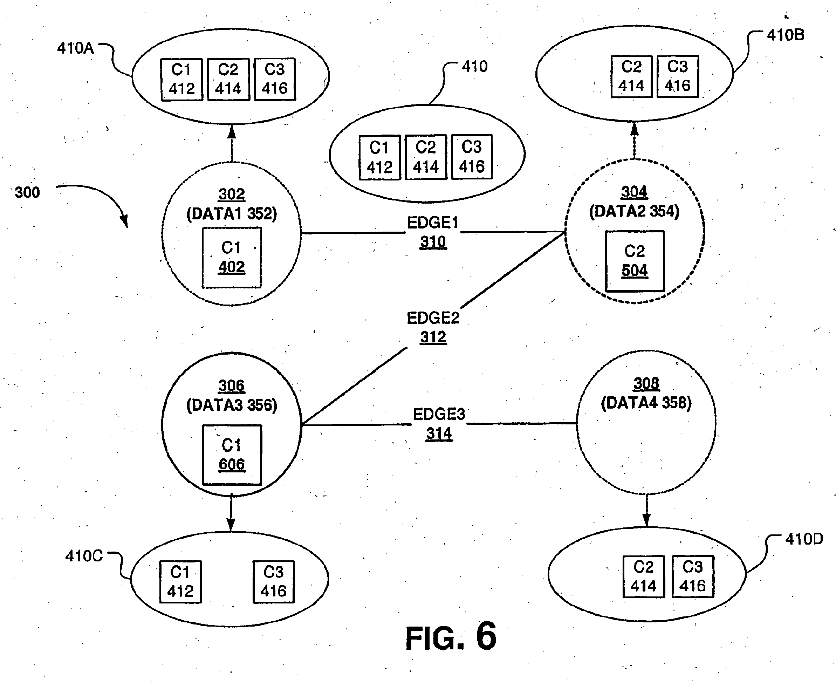

As illustrated in FIG. 6, node 306 may be colored as follows:

1. Since there is at least one uncolored node, compiler 202 may designate node 306 as the current node, which may be associated with color set 410C having colors C1 (412), C3 (416).

2. Compiler 202 may arbitrarily assign color C1 (412) to node 306. Alternatively, compiler 202 may assign a color from color set 410C that minimizes memory usage. Since color C1 (412) corresponds to a data size of 8 bytes (since this color has been assigned to 1 data element, DATA1 (352)), the data size of color C1 (412) does not result in an integer when divided by the block size. Since color C3 (416) corresponds to a data size of 0 (since this color has not been assigned to a data element), the data size of color C3 (416) results in an integer when divided by the block size. Consequently, color C1 (412) minimizes memory usage and may be selected. Node 306 has assigned color 606.

3. Since node 308 is adjacent to node 306, because node 308 is connected to node 306 by EDGE3 (314), color C1 (412) may be removed from color set corresponding to node,308, color set 410D. Color set-410D may then comprise colors C2 (414) and C3 (416).

As illustrated in FIG. 7, node 308. may be colored as follows:

1. Since there is at least one uncolored node, compiler 202 may designate node 308 as the current node, which may be associated with color set 410D having colors C2 (414), C3 (416).

2. Compiler 202 may arbitrarily assign color C3 (416) to node 308. Alternatively, compiler 202 may assign a color from color set 410D that minimizes memory usage. Since color C2 (412) corresponds to a data size of 8 bytes (since this color has been assigned to 1 data element, DATA2 (354)), the data size of color C2 (414) does not result in an integer when divided by the block size. Since color C3 (416) corresponds to a data size of 0 (since this color has not been assigned to a data element), the data size of color C3 (416) results in an integer when divided by the block size. Consequently, color C2 (412) minimizes memory usage and may be selected, and assigned to node 308. Node 308 has assigned color 708.

3. There are no uncolored nodes adjacent to node 308.

Since all nodes have been colored, no more current nodes are designated. Colored conflict graph 700 may be used to lay out data elements 352, 354, 356, 358.

In the example shown in FIGS. 4-7, if, for example, color set 410B corresponding to node 304 was empty, then in one embodiment, a least weighted conflict color could be selected. In reference to FIG. 9, if weight W2 (912) associated with EDGE2 (312) is less than weight W1 (910) associated with EDGE1 (310), the color corresponding to node 302 (i.e., color C1 (402)) would be selected as the least weighted conflict color for node 304.

### Selecting a Node to Color

As illustrated in FIG. 9, each node 302, 304, 306, 308 in a conflict graph 300 may be assigned a priority P1 (922), P2 (924), P3 (926), P4 (928) and ranked according to the priorities P1 (922), P2 (924), P3 (926), P4 (928). In embodiments of the invention, a node's priority P1 (922), P2 (924), P3 (926), P4 (928) may be computed as the weight of the node's heaviest edge. For example, assuming each edge EDGE1 (310), EDGE2 (312), EDGE (314) has a weight of W1 (910), W2 (912), and W3 (914), respectively, and that W (910) > W2 (912) > W3 (914):

Node 302 may be assigned a priority, P1 (922) of W1 (910) because EDGE1 (310) is its only edge, and has a weight of W1 (910).

Node 304 has two edges: EDGE1 (310) has a weight of W1 (910), and EDGE2 (312) has a weight of W2 (912). Node 304 may be assigned a priority, P2 (924) of W1 (910) because W1 (910) is the weight of the heaviest edge, EDGE1 (310) among all the edges connected to node 304.

Node 306 has two edges: EDGE2 (312) has a weight of W2 (912), and EDGE3 (314) has a weight of W3 (914). Node 306 may be assigned a priority; P3 (926) of W2 (912) because W2 (912) is the weight of the heaviest edge, EDGE2 (312) among all the edges connected to node 306.

Node 308 may be assigned a priority, P4 (928) of W3 (914) because EDGE3 (314) is its only edge, and has a weight of W3 (914).

Each node may be ranked in accordance with its priority. Nodes with the same priority may be ranked arbitrarily. In one embodiment, nodes may be ranked in order of highest to lowest priority. For example, node 302 and node 304 may be given rankings 902 of one (1) and 904 of two (2), respectively, since each has a priority P1 (922), P2 (924), of W1 (910) that is greater than other priorities, P3 (926), P4 (928). Alternatively, node 302 and node 304 may be given rankings 902 of two (2) and 904 of one (1), respectively, since their priorities P1 (922) and P2 (924) are equal. Node 306 may be given a ranking 906 of three (3), and node 308 maybe a given a ranking 908 of four (4). Node rankings may be used to assign colors to the nodes in order of ranking. By assigning colors C1 (412), C2 (414), C3 (416) to nodes 302, 304, 306, 308 in order of priority, nodes 302, 304, 306; 308 having the greatest conflicts have a greater chance of being assigned a color C1 (412), C2 (414), C3 (416) from a corresponding color set 410A, 410B, 410C, 410D, thereby reducing the chance that a high conflict node will be assigned the same color as an adjacent node. This, therefore, may help reduce and/or eliminate hardware resource conflicts.

### Laying Out Data Based On Colored Conflict Graph

As illustrated in FIG. 8, colored conflict graph 700 may be used to generate a data layout 800. As used herein, a "data layout" refers to an assignment of data elements, such as data elements 352, 354, 356, 358 to memory locations in memory, such as memory locations 214 in memory 206. For purposes of illustration, it may be assumed that each-data element is 8 bytes. In FIG. 10, for example, since compiler 202 knows that memory locations 0-15 and 256-271 correspond to data bank 1002A, memory locations 16-31 and 272-287 correspond to data bank 1002B, and that memory locations 240-255 and 496-511 correspond to data bank 1002N, for example, it may map data elements 352, 354, 356, 358 in accordance with colored conflict graph 700 as follows:

1. For a node 302, 304, 306, 308, assign a data bank 1002A, 1002B, ..., 1002N that corresponds to its assigned color. A node 302, 304, 306, 308 assigned to a data bank 1002A, 1002B, ..., 1002N means that the data element DATA1 (352), DATA2 (354), DATA3 (356), DATA4 (358) corresponding to the node 302, 304, 306, 308 may be assigned to memory locations that map to the assigned data bank 1002A, 1002B, ..., 1002N.

2. Assign the data element DATA1 (352), DATA2 (354), DATA3 (356), DATA4 (358) associated with the node 302, 304, 306, 308 to memory locations that map to the data bank 1002A, 1002B, ..., 1002N. To minimize memory usage the first available memory locations that map to the required data bank may be selected.

With reference to FIG. 8, if data bank BANK0 (1002A) corresponds to color Cm (412), and data bank BANK1 (1002B) corresponds to color C2 (414), corresponding data elements DATA1 (352), DATA2 (354), DATA3 (356), DATA4 (358) may be laid out as follows:

Node 302 may be processed as follows:

1. Since node 302 is assigned color C1 (412), and color C1 (412) corresponds to BANK0 (1002A), assign data bank BANK0 (1002A) to node 302. Data element DATA1 (352) corresponding to node 302 may be assigned to memory locations that map to data bank BANK0 (1002A) (i.e., 0-15, 256-271).

2. Assign data element DATA1 (352) associated with node 302 to memory locations 0-7, which are the first available memory locations that map to data bank BANK0 (1002A).

Node 304 may be processed as follows:

1. Since node 304 is assigned to color C2 (414), and color C2 (414) corresponds to BANK1 (1002B), assign data bank BANK1 (1002B) to node 304. Data element DATA2 (354) corresponding to node 304 may be assigned to memory locations that map to data bank BANK0 (1002A) (i.e., 16-31, 272-287).

2. Assign data element DATA (354) associated with node 304 to memory locations 16-23, which are the first available memory locations that map to the data bank BANK1 (1002B).

Node 306 may be processed as follows:

1. Since node 306 is assigned to color C1 (412), and color C1 (412) corresponds to BANK0 (1002A), assign data bank BANK0 (1002A) to node 306. Data element DATA3 (356) corresponding to node 306 may be assigned to available memory locations that map to data bank BANK0 (1002A) (i.e., 8-15, 256-271).

2. Assign data element DATA3 (356) associated with node 306 to memory locations 8-15, which are the first available memory locations that map to the data bank BANK0 (1002A).

Node 308 may be processed as follows:

1. Since node 302 is assigned to color C2 (414), and color C2 (414) corresponds to BANK1 (1002B), assign data bank BANK1 (1002B) to node 308. Data element DATA4 (358) corresponding to node 308 may be assigned to available memory locations that map to data bank BANK1 (1002B) (i.e., 24-31, 272-287).

2. Assign the data element DATA4 (358) associated with the node 308 to memory locations 24-31, which are the first available memory locations that map to the data bank BANK15 (1002N).

It may be noted at this point that data bank BANK2 may correspond to color C3 (416), and that any nodes 302, 304, 306, 308 that may be assigned to color C3 (416) may have a corresponding data element 352, 354,356, 358 assigned to data bank BANK2. However, BANK2 is not explicitly illustrated in FIG. 8 and FIG. 10.

Using data layout 800, sequence of machine-executable instructions 328, 330, 332, 334, 336, 338 may be executed by processor 208 during program execution with no data bank conflicts.

For example, if in execution cycle Y1 (316), instruction I1 (328) accesses data element DATA1 (352), and instruction 12 (330) accesses data element DATA2 (354) (see FIG. 3), and assuming each data bank may only process one data request per execution cycle, then using an arbitrary data layout may result in assigning data elements DATA1 (352) and DATA2 (354) to memory locations that map to the same data bank (i.e., memory locations 0-7 and 8-15, respectively). Thus, when instructions I1 (328) and I2 (330) attempt to access DATA1 (352) and DATA2 (354) in the same cycle, a delay may occur because the data elements cannot both be accessed during the same cycle since the data bank can only process one data request per cycle.

In embodiments of the invention (in reference to FIG. 8), data element DATA1 (352) may be accessed using BANK0 (1002A), and data element DATA2 (354) may be accessed using BANK1 (1002B) in the same cycle since each bank receives only one data request. In this example, consequently, a potential hardware resource conflict is avoided.

### Conclusion

Therefore, in one embodiment, a method comprises scheduling a sequence of machine-executable instructions,; and creating a data layout of data element based on a colored conflict graph, the colored conflict graph based on the sequence of machine-executable instructions.

By creating a conflict graph and assigning a color to each node in the conflict graph, the risk of hardware resource conflicts may be greatly reduced and/or eliminated in some cases. Where hardware resource conflicts may still occur, the impact of those conflicts may be greatly reduced by analyzing the impact of those conflicts before they may occur. Unlike prior art, embodiments of the invention do not restrict a compiler from scheduling instructions as early as dependencies and execution unit resources allow. Furthermore, embodiments of the invention may be used even when data layout is not known during instruction scheduling.

In the foregoing specification, the invention has been described with reference to specific embodiments thereof. It will, however, be evident that various modifications and changes may be made to these embodiments without departing therefrom. The specification and drawings are, accordingly, to be regarded in an illustrative rather than a restrictive sense.

## Claims

1. A method of operating a computer, the steps performed by the computer comprising:
creating (1200) a conflicts graph (300) having a plurality of nodes (302-308) and a number of edges (310-314), each node representing a data element accessed by at least one machine-executable instruction, and each edge, if any, connecting a pair of the plurality of nodes, and representing a potential hardware resource conflict;
colouring (1202) the conflict graph to generate a coloured conflict graph (212,700) by assigning a colour (C1-C3) to each of the plurality of nodes, each colour representing a hardware resource; and
creating (1204) a data layout (800) by mapping each data element to a memory location, the memory location mapping to a corresponding hardware resource;
wherein said assigning a colour to each of the plurality of nodes comprises, for a given node of the plurality of nodes, assigning a colour from a corresponding colour set, the corresponding colour set comprising at least one colour from a community colour set having a plurality of colours, the at least one colour not being in one or more other colour sets, the one or more other colour sets corresponding to one or more nodes adjacent to the given node; and
wherein, for each given node of the plurality of nodes, said assigning a colour from the corresponding colour set comprises:
designating the given node as a first node, the first node being an uncoloured node, and corresponding to a first corresponding colour set;
if the first corresponding colour set is not empty, assigning a first colour from the first corresponding colour set to the first node; and
if there are one or more second nodes, the one or more second nodes being uncoloured and adjacent to the first node, and corresponding to one or more second corresponding colour sets, removing the first colour from each of the one or more second corresponding colour sets;
wherein the first colour is a colour that minimizes memory usage and corresponds to a data size that is not divisible by a block size.

2. The method of claim 1, wherein if the first corresponding colour set is empty, selecting one of the plurality of colours from the community colour set.

3. The method of claim 1, wherein the selected colour of the plurality of colours is a least-weighted conflict colour.

4. The method of claim 1, additionally comprising assigning a priority to each of the plurality of nodes.

5. The method of claim 4, wherein said assigning a priority to each of the plurality of nodes comprises, for a given node of the plurality of nodes:
determining a weight for each of the one or more edges connected to the given node;
assigning to each node a priority corresponding to a greatest weight of the node's one or more edges connected to the node; and
ranking the plurality of nodes.

6. The method of claim 5, wherein said determining the weight to a given one or each of the one or more edges connected to the node comprises determining the weight based on a performance penalty associated with a hardware resource conflict represented by the given edge.

7. The method of claim 4, wherein said assigning a colour to each of the plurality of nodes comprises assigning a colour to each of the plurality of nodes in order of a corresponding priority assigned to each of the nodes.

8. The method of claim 7, wherein the hardware resource comprises a data bank, and the hardware resource comprises a plurality of the at least one machine-executable instructions accessing the data bank in a same execution cycle.

9. An apparatus (200) comprising:
circuitry capable of:
creating a conflict graph having a plurality of nodes (302-308) and a number of edges (310-314) , each node representing a data element accessed by at least one machine-executable instruction, and each edge, if any, connecting a pair of the plurality of nodes, and representing a potential hardware resource conflict;
colouring the conflict graph to generate a coloured conflict graph (212) by assigning a colour to each of the plurality of nodes, each colour representing a hardware resource; and
creating a data layout (800) by mapping each data element to a memory location (214), the memory location mapping to a corresponding hardware resource (210);
wherein said circuitry is additionally capable of assigning a colour from a corresponding colour set, the corresponding colour set comprising at least one colour from a community colour set having a plurality of colours, the at least one colour not being in one or more other colour sets, the one or more other colour sets corresponding to one or more nodes adjacent to the given node;
wherein for each given node of the plurality of nodes, said circuitry is capable of:
designating the given node was a first node, the first node being an uncoloured node, and corresponding to a first corresponding colour set;
if the first corresponding colour set is not empty, assigning a first colour from the first corresponding colour set to the first node; and
if there are one or more second nodes, the one or more second nodes being uncoloured and adjacent to the first node, and corresponding to one or more second corresponding colour sets, removing the first colour from each of the one or more second corresponding colour sets;
wherein the first colour is a colour that minimizes memory usage and corresponds to a data size that is not divisible by a block size.

10. The apparatus of claim 9, wherein said circuitry is additionally capable of assigning a priority to each of the plurality of nodes.

11. The apparatus of claim 9 further comprising:
a memory (206) having a sequence of machine-executable instructions (220) that access a plurality of data elements in one or more memory locations;
an L2, level 2, cache having plurality of data banks, each or the one or more memory locations mapping to one of the plurality of data banks.

12. A machine-readable medium having stored thereon data representing sequences of instructions, the sequences of instructions which, when executed by a machine, result in the machine performing all of the steps of a method as claimed in any one of claims 1 to 8.

## Patentansprüche

1. Computerbetriebsverfahren, wobei die von dem Computer ausgeführten Schritte umfassen:
Erzeugen (1200) einer Konfliktgraphik (300) mit mehreren Knoten (302-308) und einer Anzahl von Kanten (310-314), wobei jeder Knoten ein Datenelement repräsentiert, auf das mindestens ein maschinenausführbarer Befehl Zugriff hat, und jede Kante gegebenenfalls ein Paar der mehreren Knoten verbindet und einen potentiellen Hardware-Betriebsmittelkonflikt repräsentiert,
Färben (1202) der Konfliktgraphik unter Erzeugung einer gefärbten Konfliktgraphik (212, 700) durch Zuordnen einer Farbe (C1-C3) zu jedem der Vielzahl von Knoten, wobei jede Farbe ein Hardware-Betriebsmittel repräsentiert, und
Erzeugen (1204) eines Daten-Layouts (800) durch Abbilden jedes Datenelements auf einen Speicherplatz, wobei der Speicherplatz ein entsprechendes Hardware-Betriebsmittel abbildet,
wobei es zum Zuordnen einer Farbe zu jedem der Vielzahl von Knoten gehört, dass für einen gegebenen der Vielzahl von Knoten eine Farbe aus einer entsprechenden Farbenmenge zugeordnet wird, die mindestens eine Farbe aus einer Gemeinschafts-Farbenmenge mit mehreren Farben aufweist, wobei die mindestens eine Farbe nicht in einem oder mehreren weiteren Farbenmengen enthalten ist und die eine oder mehreren weiteren Farbenmengen einem oder mehreren dem gegebenen Knoten benachbarten Knoten entsprechen, und
wobei es zum Zuordnen einer Farbe aus der entsprechenden Farbenmenge für jeden gegebenen der Vielzahl von Knoten gehört,
dass der gegebene Knoten als erster Knoten bezeichnet wird, der ein ungefärbter Knoten ist und einer ersten entsprechenden Farbenmenge entspricht,
dass dann, wenn die erste entsprechende Farbenmenge nicht leer ist, dem ersten Knoten eine erste Farbe aus der ersten entsprechenden Farbenmenge zugeordnet wird, und
dass dann, wenn ein oder mehrere zweite Knoten vorhanden sind, die ungefärbt und dem ersten Knoten benachbart sind und einer oder mehreren zweiten entsprechenden Farbenmengen entsprechen, die erste Farbe aus der bzw. jeder zweiten entsprechenden Farbenmenge entfernt wird,
wobei die erste Farbe eine solche ist, die die Speicherbelegung minimiert und einer Datengröße entspricht, die nicht durch eine Blockgröße teilbar ist.

2. Verfahren nach Anspruch 1, wobei dann, wenn die erste entsprechende Farbenmenge leer ist, eine der Vielzahl von Farben aus der Gemeinschafts-Farbenmenge ausgewählt wird.

3. Verfahren nach Anspruch 1, wobei die aus der Vielzahl von Farben ausgewählte Farbe eine Konfliktfarbe mit dem geringsten Gewicht ist.

4. Verfahren nach Anspruch 1, wobei ferner jedem der Vielzahl von Knoten eine Priorität zugeordnet wird.

5. Verfahren nach Anspruch 4, wobei es zum Zuordnen einer Priorität zu jedem der Vielzahl von Knoten gehört, dass für einen gegebenen der Vielzahl von Knoten:
der bzw. jeder mit dem gegebenen Knoten verbundenen Kante ein Gewicht zugeordnet wird,
jedem Knoten eine Priorität zugeordnet wird, die dem größten Gewicht der gegebenenfalls mit mehreren mit dem Knoten verbundenen Kanten des Knotens entspricht, und
die Vielzahl von Knoten mit einer Rangfolge versehen wird.

6. Verfahren nach Anspruch 5, wobei es zum Bestimmen des Gewichtes für eine oder jede der gegebenenfalls mehreren mit dem Knoten verbundenen Kanten gehört, dass das Gewicht aufgrund einer Leistungsstrafe bestimmt wird, die einem von der gegebenen Kante repräsentierten Hardware-Betriebsmittelkonflikt zugeordnet ist.

7. Verfahren nach Anspruch 4, wobei es zum Zuordnen einer Farbe zu jedem der Vielzahl von Kanten gehört, dass jedem der Vielzahl von Knoten eine Farbe in der Reihenfolge einer jedem der Knoten zugeordneten entsprechenden Priorität zugeordnet wird.

8. Verfahren nach Anspruch 7, wobei das Hardware-Betriebsmittel eine Datenbank sowie mehrere der maschinenausführbaren Befehle enthält, die im gleichen Ausführzyklus auf die Datenbank zugreifen.

9. Vorrichtung (200) mit:
einer Schaltung, die in der Lage ist,
eine Konfliktgraphik mit mehreren Knoten (302-308) und einer Anzahl von Kanten (310-314) zu erzeugen, wobei jeder Knoten ein Datenelement repräsentiert, auf das mindestens ein maschinenausführbarer Befehl Zugriff hat, und jede Kante gegebenenfalls ein Paar der mehreren Knoten verbindet und einen potentiellen Hardware-Betriebsmittelkonflikt repräsentiert,
die Konfliktgraphik unter Erzeugung einer gefärbten Konfliktgraphik (212, 700) durch Zuordnen einer Farbe zu jedem der Vielzahl von Knoten zu erzeugen, wobei jede Farbe ein Hardware-Betriebsmittel repräsentiert, und
ein Daten-Layout (800) durch Abbilden jedes Datenelements auf einen Speicherplatz (214) zu erzeugen, wobei der Speicherplatz ein entsprechendes Hardware-Betriebsmittel (210) abbildet,
wobei die Schaltung ferner in der Lage ist, eine Farbe aus einer entsprechenden Farbenmenge zuzuordnen, wobei die entsprechende Farbenmenge mindestens eine Farbe aus einer Gemeinschafts-Farbenmenge mit mehreren Farben aufweist, wobei die mindestens eine Farbe nicht in einer oder mehreren Farbenmengen enthalten ist, die einem oder mehreren dem gegebenen Knoten benachbarten Knoten entsprechen,
wobei die Schaltung in der Lage ist, für jeden gegebenen aus der Vielzahl von Knoten:
den gegebenen Knoten als ersten Knoten zu bezeichnen, der ein ungefärbter Knoten ist und einer ersten entsprechenden Farbenmenge entspricht,
dann, wenn die erste entsprechende Farbenmenge nicht leer ist, dem ersten Knoten eine erste Farbe aus der ersten entsprechenden Farbenmenge zuzuordnen, und
dann, wenn ein oder mehrere zweite Knoten vorhanden sind, die ungefärbt und dem ersten Knoten benachbart sind und einer oder mehreren zweiten entsprechenden Farbenmengen entsprechen, die erste Farbe aus der bzw. jeder zweiten entsprechenden Farbenmenge zu entfernen,
wobei die erste Farbe eine solche ist, die die Speicherbelegung minimiert und einer Datengröße entspricht, die nicht durch eine Blockgröße teilbar ist.

10. Vorrichtung nach Anspruch 9, wobei die Schaltung ferner in der Lage ist, jedem der Vielzahl von Knoten eine Priorität zuzuordnen.

11. Vorrichtung nach Anspruch 9 mit ferner:
einem Speicher (206) mit einer Folge von maschinenausführbaren Befehlen (220), die auf mehrere Datenelemente an einem oder mehreren Speicherplätzen zugreifen, und
einen L2-, Pegel-2, Cache mit mehreren Datenbänken, wobei der bzw. jeder der mehreren Speicherplätze eine der Vielzahl von Datenbänken abbildet.

12. Maschinenlesbares Medium, auf dem Befehlsfolgen repräsentierende Daten gespeichert sind, wobei die Befehlsfolgen bei Ausführung auf einer Maschine dazu führen, dass die Maschine sämtliche Schritte des Verfahrens nach einem der Ansprüche 1 bis 8 ausführt.

## Revendications

1. Procédé de mise en oeuvre d'un ordinateur, les étapes effectuées par l'ordinateur comprenant :
la création (1200) d'un graphe (300) de conflits comportant une pluralité de noeuds (302 à 308) et un certain nombre de segments (310 à 314), chaque noeud représentant un élément de données auquel accède au moins une instruction exécutable en machine, et chaque segment, s'il y en a, reliant une paire de la pluralité de noeuds, et représentant un conflit potentiel pour des ressources matérielles ;
le coloriage (1202) du graphe de conflits pour engendrer un graphe de conflits colorié (212, 700) en affectant une couleur (C1 à C3) à chacun de la pluralité de noeuds, chaque couleur représentant une ressource matérielle ; et
la création (1204) d'une configuration (800) de données par transposition de chaque élément de données sur un emplacement de mémoire, l'emplacement de mémoire transposant sur une ressource matérielle correspondante ;
dans lequel ladite affectation d'une couleur à chacun de la pluralité de noeuds comprend, pour un noeud donné de chacun de la pluralité de noeuds, l'affectation d'une couleur à partir d'un ensemble de couleurs correspondantes, l'ensemble de couleurs correspondantes comprenant au moins une couleur provenant d'un ensemble de couleurs communes comportant une pluralité de couleurs, l'au moins une couleur n'étant pas dans un ou plusieurs autres ensembles de couleurs, les un ou plusieurs autres ensembles de couleurs correspondant à un ou plusieurs noeuds adjacents au noeud donné ; et
dans lequel, pour chaque noeud donné de la pluralité de noeuds, ladite affectation d'une couleur provenant de l'ensemble de couleurs correspondantes comprend :
la désignation du noeud donné comme premier noeud, le premier noeud étant un noeud non colorié, et correspondant à un premier ensemble de couleurs correspondantes ;
si le premier ensemble de couleurs correspondantes n'est pas vide, l'affectation, au premier noeud, d'une première couleur provenant du premier ensemble de couleurs correspondantes ; et
s'il y a un ou plusieurs seconds noeuds, les un ou plusieurs seconds noeuds étant non coloriés et adjacents au premier noeud, et correspondant à un ou plusieurs seconds ensembles de couleurs correspondantes, le retrait de la première couleur de chacun des un ou plusieurs seconds ensembles de couleurs correspondantes ;
dans lequel la première couleur est une couleur qui minimise l'utilisation de la mémoire et qui correspond à une taille de données qui n'est pas divisible par une taille de bloc.

2. Procédé selon la revendication 1, dans lequel, si le premier ensemble de couleurs correspondantes est vide, on choisit l'une de la pluralité de couleurs de l'ensemble des couleurs communes.

3. Procédé selon la revendication 1, dans lequel la couleur choisie de la pluralité de couleurs est une couleur de conflit la moins pondérée.

4. Procédé selon la revendication 1, comprenant en plus l'affectation d'une priorité à chacun de la pluralité de noeuds.

5. Procédé selon la revendication 4, dans lequel ladite affectation d'une priorité à chacun de la pluralité de noeuds comprend, pour un noeud donné de la pluralité de noeuds :
la détermination d'un poids pour chacun des un ou plusieurs segments reliés au noeud donné ;
l'affectation à chaque noeud d'une priorité correspondant à un poids le plus grand des un ou plusieurs segments du noeud connectés au noeud ; et
le classement de la pluralité des noeuds.

6. Procédé selon la revendication 5, dans lequel ladite détermination du poids pour l'un donné ou pour chacun des un ou plusieurs segments reliés au noeud comprend la détermination du poids en se basant sur une pénalité de performance associée à un conflit pour des ressources matérielles représenté par le segment donné.

7. Procédé selon la revendication 4, dans lequel ladite affectation d'une couleur à chacun de la pluralité de noeuds comprend l'affectation d'une couleur à chacun de la pluralité de noeuds dans l'ordre d'une priorité correspondante affectée à chacun des noeuds.

8. Procédé selon la revendication 7, dans lequel la ressource matérielle comprend une banque de données et la ressource matérielle comprend l'accès à la banque de données par une pluralité des, au moins une, instructions exécutables en machine dans un même cycle d'exécution.

9. Appareil (200) comprenant :
des circuits capables :
de créer un graphe de conflits comportant une pluralité de noeuds (302 à 308) et un certain nombre de segments (310 à 314), chaque noeud représentant un élément de données auquel accède au moins une instruction exécutable en machine, et chaque segment, s'il y en a, reliant une paire de la pluralité de noeuds, et représentant un conflit potentiel pour des ressources matérielles ;
de colorier le graphe de conflits pour engendrer un graphe de conflits colorié (212) en affectant une couleur à chacun de la pluralité de noeuds, chaque couleur représentant une ressource matérielle ; et
de créer une configuration (800) de données par transposition de chaque élément de données sur un emplacement (214) de mémoire, l'emplacement de mémoire transposant sur une ressource matérielle (210) correspondante ;
dans lequel lesdits circuits sont capables en plus d'affecter une couleur à partir d'un ensemble de couleurs correspondantes, l'ensemble de couleurs correspondantes comprenant au moins une couleur provenant d'un ensemble de couleurs communes comportant une pluralité de couleurs, l'au moins une couleur n'étant pas dans un ou plusieurs autres ensembles de couleurs, les un ou plusieurs autres ensembles de couleurs correspondant à un ou plusieurs noeuds adjacents au noeud donné ;
dans lequel, pour chaque noeud donné de la pluralité de noeuds, lesdits circuits sont capables :
de désigner le noeud donné comme premier noeud, le premier noeud étant un noeud non colorié, et correspondant à un premier ensemble de couleurs correspondantes ;
si le premier ensemble de couleurs correspondantes n'est pas vide, d'affecter, au premier noeud, une première couleur provenant du premier ensemble de couleurs correspondantes ; et
s'il y a un ou plusieurs seconds noeuds, les un ou plusieurs seconds noeuds étant non coloriés et adjacents au premier noeud, et correspondant à un ou plusieurs seconds ensembles de couleurs correspondantes, de retirer la première couleur de chacun des un ou plusieurs seconds ensembles de couleurs correspondantes ;
dans lequel la première couleur est une couleur qui minimise l'utilisation de la mémoire et qui correspond à une taille de données qui n'est pas divisible par une taille de bloc.

10. Appareil selon la revendication 9, dans lequel lesdits circuits sont capables en plus d'affecter une priorité à chacun de la pluralité de noeuds.

11. Appareil selon la revendication 9, comprenant en outre :
une mémoire (206) comportant une séquence d'instructions (220) exécutables en machine qui accèdent à une pluralité d'éléments de données dans un ou plusieurs emplacements de mémoire ;
une antémémoire, L2, de niveau 2 comportant une pluralité de banques de données, chacun des un ou plusieurs emplacements de mémoire transposant sur l'une de la pluralité de banques de données.

12. Support lisible en machine dans lequel sont mémorisées des données représentant des séquences d'instructions, les séquences d'instructions qui, lorsqu'elles sont exécutées par une machine, ont pour résultat d'effectuer dans la machine toutes les étapes d'un procédé selon l'une quelconque des revendications 1 à 8.
